# EUROPEAN PATENT APPLICATION

(11) **EP 4 603 696 A1**
(43) Date of publication of application: **20.08.2025**
(21) Application number: 24158463.0
(22) Date of filing: 19.02.2024
(51) Int. Cl.: F03D 1/06, F03D 80/30

(54) **WIND TURBINE BLADES AND METHODS OF MANUFACTURING WIND TURBINE BLADES**

(71) Applicant: LM Wind Power A/S, 6000 Kolding (DK)
(72) Inventor: HANSEN, Lars Bo, 6000 Kolding (DK)
(74) Representative: Bardehle Pagenberg S.L.

(57) **Abstract**

The present disclosure relates to blades (10) for wind turbines (2), to wind turbines (2) and to methods (100) for manufacturing wind turbine blades (10). A wind turbine blade (10) comprises a spar cap (74, 76), one or more electrically insulating polymer layers (81) between the spar cap (74, 76) and an outer surface of the blade (10), and an air termination system (82, 83) arranged at the outer surface of the wind turbine blade (10).

## Description

### FIELD

The present disclosure relates to blades for wind turbines, to wind turbines and to methods for manufacturing wind turbine blades. The present disclosure further relates to protecting wind turbine blades from damage due to lightning strikes.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

During the lifetime of the wind turbine, the rotor blades are particularly prone to lightning strikes. Furthermore, as wind turbine blades increase in size, the risk of lightning striking also increases. In order to mitigate risks arising from lightning strikes, wind turbine blades are typically provided with a lightning protection system (LPS). Thus, it is known to provide an air termination system, which is an external part of the LPS. The air termination system may comprise one or more elements or terminations to intercept lightning strikes. Specifically, these elements or terminations may comprise one or several lightning receptors, for example discrete metal studs arranged through the blade surface. The air termination system is typically electrically connected to a down conductor or cable, which extends along the longitudinal length of the blade to the blade root area. An end of the down conductor or cable is typically electrically connected to the ground. Accordingly, when a lightning strike occurs, the electrical lightning current is conducted from the air termination system, e.g. from lightning receptors, to the ground via the down conductor.

However, the air termination system may not be sufficient for avoiding damage to the wind turbine blade. A wind turbine blade generally includes a shell comprising a composite material, e.g. including glass fiber layers, and structural elements like spar caps and webs. The spar caps may also be called "main laminates" and are the most important structural element to sustain and transmit bending loads. The spar caps are generally made of, or comprise, carbon fiber material because of its superior mechanical properties as compared to glass fiber. Spar caps that combine both carbon and glass fibers, and spar caps that use yet different fibers are also known in the art.

A shell generally comprises two half shells bonded to each other. The half shells may have small defects, for example voids or dry spots, i.e. spots where resin is lacking because of incomplete infusion. Due to the significant length of the blades, the thickness of the shells and the use of resin infusion for manufacturing a half shell of a wind turbine blade, avoiding such defects is difficult. When lightning reaches a shell having some of these defects, the risk of a lightning passing from the outside of the surface through the defects to the inside of the blade (e.g. to the electrically conductive carbon fiber spar caps) increases. Thus the risk of damage to the blade such as delamination increases as well.

The present disclosure aims at reducing the risk of damage to a wind turbine blade due to lightning striking the wind turbine blade.

### SUMMARY

In an aspect of the present disclosure, a blade for a wind turbine is provided. The blade has a length along a longitudinal direction of the blade. The blade comprises a spar cap extending along the longitudinal direction and having a width along a chordwise direction of the wind turbine blade. The blade further comprises an air termination system arranged at an outer surface of the wind turbine blade. Along at least a portion of the length of the blade, a cross-section of the blade perpendicular to the longitudinal direction comprises a plurality of layers arranged between the spar cap and the outer surface of the blade. The plurality of layers covers the width of the spar cap along the chordwise direction. One or more first layers of the plurality of layers are made of electrically insulating polymer. Optionally, the plurality of layers may comprise one or more second layers which are made of fiber reinforced composite material.

According to this aspect, a shell of a wind turbine blade includes at least one electrically insulating polymer layer between the spar cap and the outer surface of the shell. The at least one electrically insulating polymer layer forms a barrier between an outside surface of the wind turbine blade and the spar cap, the risk of a lightning reaching and damaging the spar cap when the lightning strikes the wind turbine blade can thus be greatly reduced. The air termination system will direct the lightning to a down-conductor.

The presence of one or more polymer layers, e.g. including polymer sheets or films such as plastic sheets or plastic films, instead of a composite material such as a glass fiber composite over the spar cap (i.e. the polymer layers, e.g. plastic layers, replace fiber composite layers) may help to reduce the weight of the wind turbine blade. In addition, maintenance and repair actions may be facilitated as accessing and removing polymer layers may be easier than replacing a portion of for example a set of glass fiber layers.

A layer, e.g. a fiber layer or a polymer layer such as a plastic layer, may be understood as an amount of material, that is different from the material above or below it. For example, in a cross-section of a half blade shell of a wind turbine, layers of fiber composite material may be distinguished from layers of plastic material. A layer may include one or more sheets or films. For example, a layer of fiber composite material may comprise one or more fiber sheets surrounded by resin. And for example, a plastic layer may include one or more plastic sheets or films.

Throughout the present disclosure, it may be understood that a polymer layer or a polymer sheet or film does not comprise fibers. In this regard, a layer of composite material is not to be understood as a polymer layer, e.g. a plastic layer. For example, a glass fiber composite layer or a carbon fiber composite layer are different from a polymer layer. A polymer layer may comprise a synthetic polymer, e.g. plastic. A plastic layer may for example comprise polyethylene terephthalate (PET). A polymer layer may comprise a natural polymer, e.g. natural rubber. When arranged on a mold for manufacturing a shell part of a wind turbine blade, e.g. a half shell, the polymer sheet(s) or film(s) may have a defined shape, e.g. rectangular.

Throughout the present disclosure, an electrically insulating layer or material may refer to a layer or material which does not conduct electricity easily. The layer or material may have a high resistance to the flow of electrical current. For example, depending on the material, an electrical insulator may have a resistivity of at least 10¹² Ω·m. A plastic layer may for example have a resistivity in the range of 10¹² to 10¹⁸ Ω·m. An electrically insulating layer may have a high breakdown strength. For example, a plastic layer may have a breakdown strength in the range of 15 to 50 kV/mm, for example between 20 and 40 kV/mm.

In a further aspect of the disclosure, a method of manufacturing a wind turbine blade is provided. The method comprises arranging one or more layers of fiber, e.g. glass fiber, on a shell part mold and arranging one or more sheets made of electrically insulating polymer, specifically electrically insulating plastic, on the shell part mold. The method further comprises arranging a spar cap over the one or more polymer layers, infusing the one or more fiber layers with resin, curing the resin and obtaining a shell part of the wind turbine blade. The method further comprises arranging an air termination system at an outer surface of the shell part of the wind turbine blade.

In a further aspect of the disclosure, a wind turbine is provided. The wind turbine comprises a wind turbine blade according to the previous aspect.

In a further aspect of the disclosure, a wind turbine blade is provided. The wind turbine blade comprises a shell. The shell includes glass fiber composite and an electrically insulating plastic portion directly in contact with the glass fiber composite and extending along a longitudinal direction of the wind turbine blade. The wind turbine blade further comprises a spar cap extending along the longitudinal direction of the wind turbine blade and bonded to the plastic portion and/or to the glass fiber composite. The blade further comprises an air termination system arranged at an outer surface of the shell.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 3 schematically illustrates an enlarged perspective view of an example of a blade for a wind turbine;
Figure 4 schematically illustrates a portion of an example of a cross-section of a downwind blade shell part of a wind turbine blade, the cross-section being perpendicular to the longitudinal direction of the wind turbine blade;
Figure 5 schematically illustrates a portion of a longitudinal cross-section of an example of a downwind blade shell part of a wind turbine blade;
Figure 6 schematically shows a flow chart of an example of a method for manufacturing a wind turbine blade; and
Figure 7 is a schematic diagram illustrating an example of a mold system for molding a blade shell for a wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

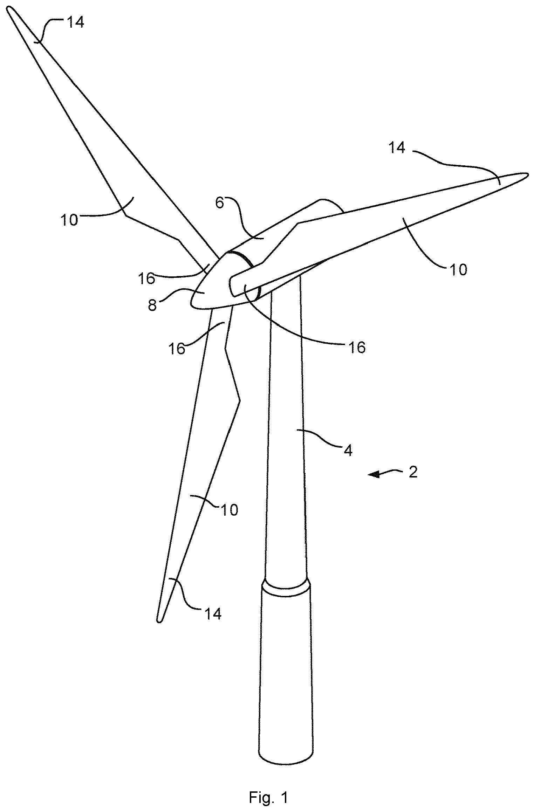

Fig. 1 illustrates a conventional modern upwind wind turbine 2 according to the socalled "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

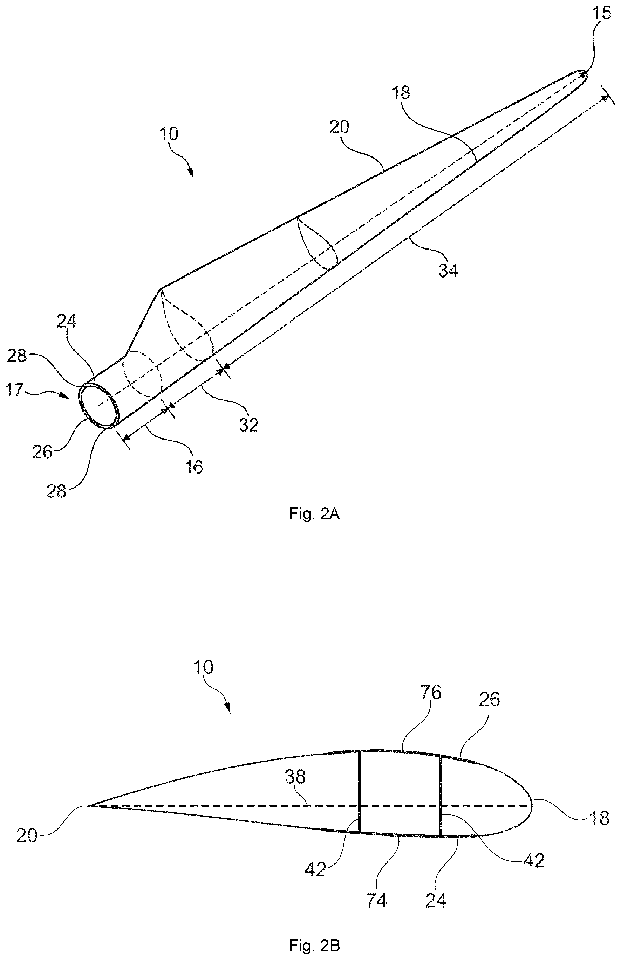

Fig. 2A shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder of the blade 10 is defined as the position where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically comprising fiber-reinforced polymer, e.g. glass fiber composite. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

Figure 2B is a schematic diagram illustrating a cross sectional view of an example of a wind turbine blade 10, e.g. of the airfoil region of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could for example be a spar box with spar sides, such as a trailing edge spar side and a leading edge spar side in other examples. The spar caps 74, 76 may comprise for example carbon fibers and/or glass fibers, while the rest of the shell parts 24, 26 may generally comprise glass fibers. The spar caps 74, 76 may be part of, i.e. may be integrally formed with, the respective blade shell parts, or they may be adhered to the respective blade shell parts. Furthermore, each shell part 24, 26 may comprise one or more additional spar caps.

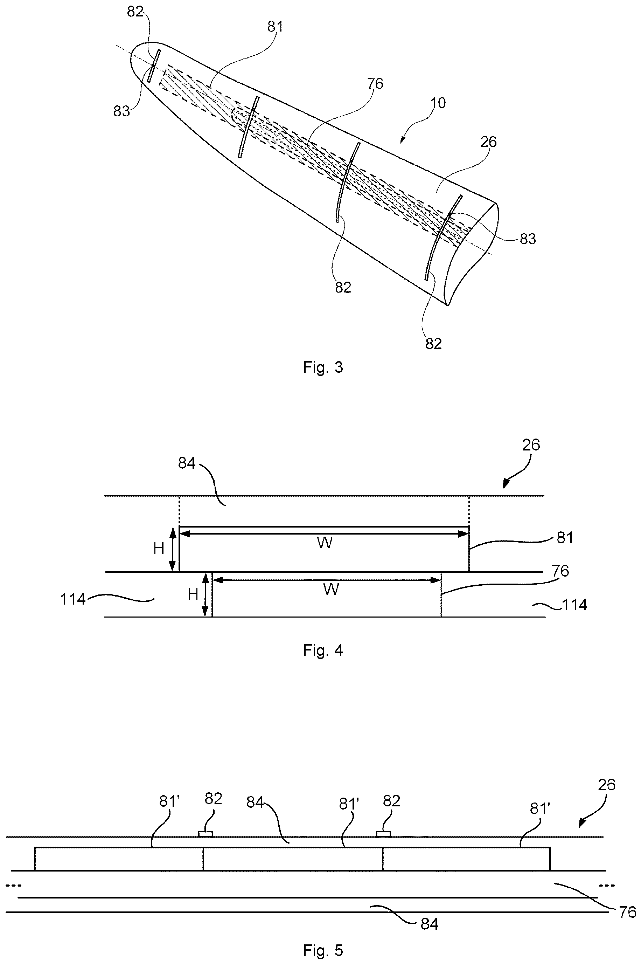

In an aspect of the present disclosure, a blade 10 for a wind turbine 2 is provided. An enlarged perspective view of an example of such a blade 10 is provided in figure 3. The blade 10 has a length along a longitudinal direction of the blade 10. The blade 10 comprises a spar cap 76 extending along the longitudinal direction and having a width along a chordwise direction of the wind turbine blade 10. The blade further comprises an air termination system 82, 83 arranged at an outer surface of the wind turbine blade 10. Along at least a portion of the length of the blade, a cross-section of the blade perpendicular to the longitudinal direction comprises a plurality of layers arranged between the spar cap 76 and the outer surface of the blade. The plurality of layers covers the width of the spar cap 76 along the chordwise direction. One of more first layers 81 of the plurality of layers are made of electrically insulating polymer (e.g. plastic), in particular polymer devoid of fibers, see e.g. figure 4. The plurality of layers may further comprise one or more second layers 84 made of fiber reinforced composite material.

The one or more first layers may be particularly useful if the spar cap may conduct electricity, e.g. if the spar cap comprises carbon fibers or carbon pultrusions. Carbonization, delamination and other types of damage caused by the lightning striking the wind turbine blade may be avoided or at least reduced. The one or more first layers may of course also improve the protection of other spar caps, e.g. spar caps which lack carbon, such as spar caps comprising glass fibers or glass fiber pultrusions.

A width of the one or more first layers 81 may be at least equal to a width of the spar cap 76, and a length of the one or more first layers 81 may be at least equal to a length of the spar cap 76. I.e., the one or more first layers 81 may cover, e.g. entirely cover, the surface of the spar cap 76 faced by the one or more first layers 81 both along the longitudinal direction of the wind turbine blade 10 and along the chordwise direction of the wind turbine blade 10. The one or more first layers may be directly adjacent to and attached to the spar cap 76. I.e., a surface of a first layer may be attached to a surface of the spar cap 76 facing an outside of the wind turbine blade 10.

The electrically insulating polymer may be plastic. The one or more first layers may comprise, e.g. may be, one or more polymer, e.g. plastic, sheets or films. I.e., a first layer of the blade shell part may be formed by one or more polymer, e.g. plastic, sheets or films which are electrically insulating.

Figure 4 provides a schematic representation of a portion of an example of a cross-section of a downwind blade shell part 26 of a wind turbine blade 10, the cross-section being perpendicular to the longitudinal direction of the wind turbine blade 10. The blade 10 may comprise one or more first layers 81 of polymer insulating material and may further comprise one or more second layers 84, e.g. made of glass fiber composite. The fiber composite layers 84 in this example may be attached to a surface of the polymer layers 81 facing an outside of the wind turbine blade 10.

In this regard, figure 4 shows spar cap 76 and the one or more polymer layers 81 directly on top of it, and directly on top of them the one or more fiber composite layers 84 are arranged. The one or more fiber composite layers 84 may cover the polymer one or more polymer layers 81 both along the longitudinal direction of the wind turbine blade 10 and along the chordwise direction of the wind turbine blade. An outer surface of the one or more fiber composite layers 84 may be an outer surface of the downwind blade shell part 26. The air termination system, not shown in figure 4, may be arranged at the surface of the one or more fiber composite layers 84 facing the outside of the wind turbine blade 10.

In this manner, lightning is substantially prevented from reaching the spar cap 76 due to the presence of the one or more polymer layers 81 and the blade may still be sufficiently stiff and rigid due to the presence of the one or more fiber composite layers 84.

In other examples, in cross-section, the one or more first layers 81 may not be directly joined to the spar cap 76. For example, one or more fiber composite layers may separate the one or more polymer layers 81 and the spar cap 76. Other configurations of fiber composite layers and polymer layers may also be possible. For example, in a cross-section perpendicular to the longitudinal direction of the blade, the blade may comprise the spar cap, one or more fiber layers directly on top of the spar cap, one or more polymer layers directly on top of the one or more fiber layers, additional one or more fiber layers directly on top of the one or more polymer layers, additional one or more polymer layers directly on top of the additional one or more fiber layers, still one or more fiber layers and then the air termination system.

In some examples, e.g. in the example of figure 3, the air termination system may comprise a plurality of lightning receptors 83, and specifically the air termination system may further comprise a plurality of diverter strips 82 for guiding lightning to the lightning receptors 83. Diverter strips 82 may be made from tungsten in some examples.

The air termination system, e.g. lightning receptors 83, may be electrically connected to a lightning down conductor. The lightning down conductor may extend along the longitudinal direction of the wind turbine blade 10, e.g. from a tip region of the blade to a root region of the blade. In some examples, the lightning down conductor may be arranged with a shear web 42 and it may extend along the shear web 42, e.g. substantially along the whole length of the blade 10.

The lightning down conductor may be electrically connected to a ground connection. The down conductor may thus facilitate conduction of a current from the lightning receptors 81 to the ground connection, therefore protecting the wind turbine blade 10 from damages arising from the high currents resulting from a lightning strike. The down conductor may for example comprise a cable including an electrically conductive material such as copper or aluminum.

In a cross-section perpendicular to a longitudinal direction of the blade 10, the blade 10 may further comprise fiber composite adjacent the one or more first layers 81, both at a leading edge side and at a trailing edge side of the one or more first layers 81, see figure 4. The one or more polymer layers 81 may therefore be surrounded by fiber composite along their height. A height H and width W of a first layer 81 and the spar cap 76 have been indicated in figure 4. A height may also be referred to as thickness. First layer 81 may comprise one or more sheets or films.

The one or more first layers 81 may extend beyond the spar cap 76 along the chordwise direction of the wind turbine blade 10, specifically towards a leading edge 18 and towards a trailing edge 20 of the wind turbine blade 10, see figures 3 and 4. If a lightning strikes the wind turbine blade close to the leading edge or the trailing edge, the probability of the lightning advancing towards and reaching the spar cap in a chordwise direction may be reduced.

The one or more first layers 81 may additionally or alternatively extend beyond the spar cap 76 along a longitudinal direction of the wind turbine blade 10, see figure 3. This may help to reduce the probability of a lightning striking near the tip 15 of the blade 10 reaching and damaging the spar cap 76, as well as to obtain a more lightweight blade 10. A lighter tip region of the blade 10 may help to reduce a flapwise bending moment and reduce stress and damage to the blade, e.g. to the blade root. Also, a gravity moment may be reduced, and the wind turbine blade 10 and e.g. the bearing connecting the blade 10 to the hub 8 may suffer less when the blade 10 is at about ±90° in the rotor plane.

The thickness (or height) of the one or more first layers 81 may be chosen depending on the electrical insulation, the desired blade weight and blade stiffness. Similarly, if the second layers, e.g. glass fiber composite layers, 84 are present, the thickness of the glass fiber composite layers 84 may be chosen depending on the desired blade stiffness and blade weight. In some examples, a thickness H of a first layer 81 may be between 100 and 500 microns, specifically between 125 and 300 microns. This thickness range may provide a good balance between achieving a good electrical insulation while having a good blade stiffness.

The polymer material of the first layers 81 may be selected for example according to its electrical insulation properties. The capacity of bonding to the adjacent elements, e.g. the spar cap 76 and/or resin for infusion and curing, may also be considered. In some examples, an adhesion strength between a first layer and 81 a resin, e.g. a polyester resin or an epoxy resin, may be between 8 and 10 MPa. The one or more electrically insulating polymer, e.g. plastic, layers may be polycarbonate layers in some examples. This plastic material may have good electrical insulation properties and good adhesion capabilities.

In other examples, the one or more electrically insulating polymer layers may comprise polyethylene terephthalate (PET). For example, Mylar^{®} films or Melinex^{®} films may be used. PET, as well as other plastic materials, may not very easily bond with the spar cap 76 (and/or to one or more second layers 84), so the surface of the plastic layer 81 to be attached to the spar cap 76 and/or to a fiber layer may be treated or coated for improving adhesion to the spar cap 76. For example, an electrically insulating polymer layer attached to the spar cap 76 may comprise a coating for improving the attachment to the spar cap 76.

In some examples, a surface of a first layer 81 joined to the spar cap 76 (and/or to a second layer) may have been modified by a corona treatment. For example, a surface of a polymer film such as a plastic film may be modified by such a treatment. A corona treatment, which may sometimes be referred to as air plasma, is a surface modification technique that uses a low temperature corona discharge plasma to impart changes to the properties of the surface. The capability of bonding to another surface, e.g. to the spar cap surface, may be increased after the corona treatment.

In some examples, an adhesive may be used to improve adhesion between a surface of the first layer 81 and an adjacent surface. For example, an adhesive may be present between a surface of the first layer 81 and a surface of the spar cap 76 (and/or of the second layer 84).

At least one of the one or more first layers 81 may be provided in a single portion or section such that the spar cap 76 may be covered, e.g. completely covered, by the single polymer layer 81, or the polymer layer 81 may be provided in two or more sections. If the polymer layer is provided as multiple sections, the sections may be arranged along a longitudinal direction of the wind turbine blade 10. The number of sections may be optimized and the shape of the individual sections may differ from each other.

Figure 5 schematically shows a portion of a longitudinal cross-section of an example of a downwind blade shell part 26 of a wind turbine blade 10. The chordwise direction is perpendicular to the plane of the figure. In this example, three sections 81' of the polymer layer 81 are shown. The polymer sections touch each other. In some examples, the separate sections may overlap at the edges in order to ensure that insulation is provided along the entire length of the spar cap.

In other examples, two consecutive sections 81' may be separated along the longitudinal direction of the blade, e.g. by glass fiber composite. If a portion of the spar cap 76 is not covered by a polymer layer section 81', a portion of the air termination system 82, 83 may cover that spar cap portion. Regardless of whether the polymer layer 81, e.g. the plastic layer 81, is provided in a single section or in a plurality of sections, the spar cap 76 will be protected as the polymer layer 81 will create a barrier to lightning and/or as the air termination system will intercept lightning.

Although figures 3 - 5 refer to a polymer layer 81 contacting a spar cap 76 of the downwind blade shell part 26 (or attached to the downwind blade shell part 26), the corresponding features and explanations also apply to a polymer layer contacting a spar cap 74 of the upwind blade shell part 24. In some examples, at least a polymer layer 81 is provided in the downwind blade shell part 26 and at least a polymer layer 81 is provided in the upwind blade shell part 24. In some examples, all the spar caps of a wind turbine blade 10 may be protected by a corresponding polymer layer 81. As previously mentioned, in other examples a polymer layer 81 may not need to be directly on top of the spar cap.

According to a further aspect of the disclosure, a wind turbine 2 is provided. The wind turbine comprises a wind turbine blade 10 according to the previous aspect. All the wind turbine blades 10 of the wind turbine 2 may comprise at least one polymer layer 81, e.g. a plastic layer 81, as previously described. The wind turbine may include a down conductor and a grounding element such that, together with the air termination system, form a lightning protection system (LPS).

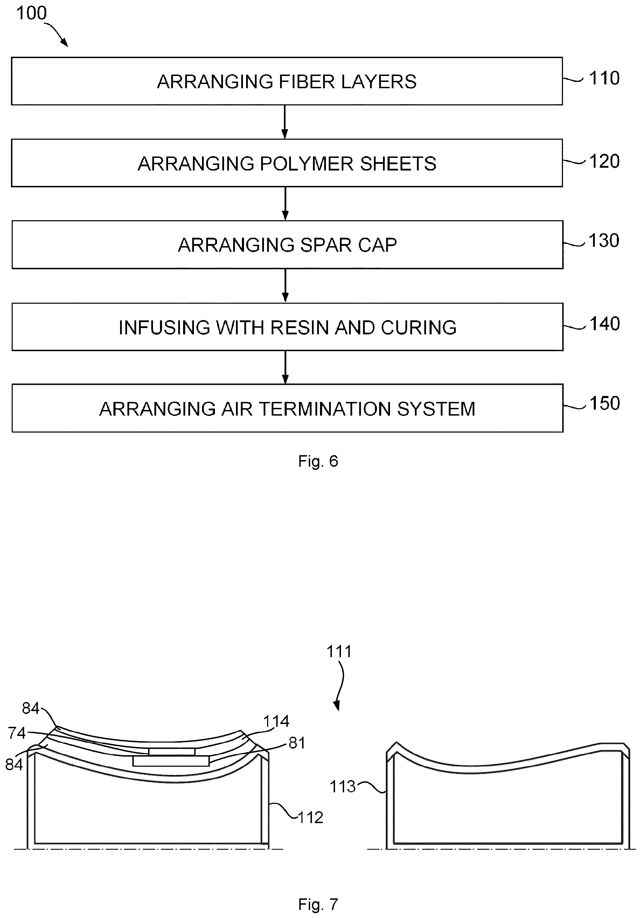

Still in a further aspect of the disclosure, a method 100 of manufacturing a wind turbine blade 10 is provided. An example of the method 100 is illustrated in the flow chart of figure 6. The method comprises, at block 110, arranging one or more layers of fiber, e.g. glass fiber, on a shell part mold. The layers of fibers may be in the form of fiber mats. A "fiber mat" may herein be regarded as a piece of cloth or fabric comprising fibers. The fibers may have a variety of different orientations e.g. the fiber mats may be uniaxial, biaxial, multi-axial or different. The fibers may be woven with different types of weaves or may be unwoven. The fiber mats may comprise fibers in other arrangements, e.g. stitched fibers, flattened strands with adhesives to improve fiber mat integrity, and others. In other examples, layers of prepreg material and/or fiber rovings may be used.

The method further comprises, at block 120, arranging one or more sheets made of electrically insulating polymer 81, specifically electrically insulating plastic, on the shell part mold or on the layers of fiber. As mentioned before, the order of the deposition of polymer and fibers may vary in different examples.

The method further comprises, at block 130, arranging a spar cap 74, 76 over the polymer sheets 81 (optionally directly on the polymer sheets), and at block 140, infusing the sheets of fiber with resin, curing the resin and obtaining a shell part 24, 26 of the wind turbine blade. The method further comprises, at block 150, arranging an air termination system 82, 83 at an outer surface of the shell part of the wind turbine blade 10. The air termination system 82, 83 may be arranged 150 after two blade shell parts, specifically an upwind 24 and a downwind 26 blade shell part, have been bonded. For example, the air termination system may be arranged after at least two blade shell parts have been joined, forming a closed wind turbine blade shell like for instance the one of the example of figure 2A.

As previously explained, the spar cap 74, 76 may become part of the corresponding shell part, or may be attached, e.g. bonded, to the shell part a *posteriori.* Therefore, the step of arranging 130 the spar cap may be performed before the step of infusing and curing 140, or after the step of infusing and curing 140, respectively. A shell part may include more than one spar cap in some examples. A spar may comprise pultruded elements, optionally plates, particularly carbon fiber plates. In some of these examples, a plurality of stacks of pultruded plates may be arranged and infused, e.g. with epoxy resin, on the mold.

The one or more polymer sheets 81, e.g. plastic films, may be arranged directly on top of at least a portion of the layers of fiber. I.e., a plurality of sheets of glass fiber may be first arranged in the shell part mold, and the polymer sheets 81, either as a single sheet or as multiple sections, may be arranged on top of the fiber layers. Fiber layers may also be arranged at the sides of the polymer sheets 81, i.e. between the polymer sheets 81 and the leading edge and trailing edge ends of the mold.

The method 100 may further comprise performing a corona treatment on a surface of the polymer sheet to be attached to the spar cap 74, 76 and/or a surface of the polymer sheet 81 to be attached to a fiber layer, prior to its deposition on the mold. This may improve adhesion between the polymer sheet and the spar cap or the fiber layer. In other examples, such treatment may be dispensed with. For example, if the polymer sheet comprises, e.g. is made of, polycarbonate, then a corona treatment may be dispensed with. In other examples, an improved adhesion may be provided in other ways. For example, a surface of the polymer sheet 81 to be bonded to the spar cap 74, 76 (or a glass fiber layer) may be coated with a suitable material for increasing adhesion.

As the polymer sheet(s) 81 arranged on the shell part mold may difficult the resin filling the mold since the resin may not go through the polymer sheet(s) 81, at last a resin input per side of the mold may be provided. Infusing the sheets of fiber with resin may therefore comprise providing resin on the mold from a leading edge side and from a trailing edge side of the mold.

If the spar cap 74, 76 is to be within the shell part, the method may further comprise arranging filler material 114 in the areas not covered by the spar cap 74, 76, see figure 7. For example, after the spar cap 74, 76 has been arranged over the polymer sheet(s) 81, filler material may be placed at the sides of the polymer sheet(s) 81. The amount of filler material 114 may be such that a flush surface may be obtained between the filling material 114 and the spar cap 74, 76. Examples of filler material 114 may be balsa wood or foam.

Additional layers of fiber, e.g. glass fiber, may be arranged on the mold, for example after having arranged the spar cap 74, 76. Then infusing with resin and curing the resin may be performed.

Figure 7 is a schematic diagram illustrating an example of a mold system for molding a blade shell of a wind turbine blade 10. Figure 7 further shows a schematic example of a disposition of the elements arranged on a mold surface when the spar cap belongs to an inside of the shell part. The mold system 111 comprises a first mold 112 and a second mold 113. The first mold 112 is configured for manufacturing a first blade shell part of a wind turbine blade, such as an upwind shell part of the wind turbine blade (forming the pressure side), and has a mold surface for depositing e.g. fibers. The second mold 113 is configured for manufacturing a second blade shell part of the wind turbine blade, such as a downwind shell part of the wind turbine blade (forming the suction side), and has a mold surface for depositing e.g. fibers.

Once the upwind blade shell part 24 and the downwind blade shell part 26 have been manufactured, they may be glued to obtain a wind turbine blade shell. One or more spar webs may be added to connect the spar caps.

As method 100 is directed to obtaining a wind turbine blade as referred to in the previous aspect, details and explanations provided with respect to the wind turbine blade 10 and with respect to the method 100 may be applicable to the other.

Still in a further aspect of the disclosure, another wind turbine blade 10 is provided. The wind turbine comprises a shell. The shell includes glass fiber composite 84 and an electrically insulating plastic portion 81 directly in contact with the glass fiber composite 84 and extending along a longitudinal direction of the wind turbine blade 10. The blade further comprises a spar cap 74, 76 extending along the longitudinal direction of the wind turbine blade10 and bonded to the plastic portion 81 and/or to the glass fiber composite 84. The blade further comprises an air termination system 82, 83 arranged at an outer surface of the wind turbine blade shell. For example, the air termination system may be arranged at an airfoil region 34 of the wind turbine blade.

The plastic portion 81 may comprise one or more plastic films. In some examples, the plastic portion 81 may have a thickness between 100 and 500 microns, specifically between 125 and 300 microns.

The plastic portion 81 may extend beyond the spar cap 74, 76, specifically towards a tip 15, a leading edge 18 and a trailing edge 20 of the blade.

The air termination system may comprise a plurality of lightning receptors 83 and a plurality of strips 82 for guiding lightning to the lightning receptors 83. The strips 82 may be arranged along a chordwise direction. The strips 82 may be spaced along a longitudinal direction of the blade. The lightning receptors 83 may be electrically connected to a down conductor.

The blade may be configured to pass a high voltage subsequent stroke attachment, HV - SSAT, test.

The details and explanations of the previous aspects may be applied to this aspect, and *vice versa.*

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A blade (10) for a wind turbine (2) having a length along a longitudinal direction of the blade (10), the blade (10) comprising:
a spar cap (74, 76) extending along the longitudinal direction and having a width along a chordwise direction of the wind turbine blade (10); and
an air termination system (82, 82) arranged at an outer surface of the blade (10);
wherein along at least a portion of the length of the blade (10), a cross-section of the blade (10) perpendicular to the longitudinal direction comprises:
a plurality of layers (81, 84) arranged between the spar cap (74, 76) and the outer surface of the blade (10), the plurality of layers (81, 84) covering the width of the spar cap (74, 76) along the chordwise direction; wherein
one or more first layers (81) of the plurality of layers (81, 84) are made of electrically insulating polymer.

2. The blade of claim 1, wherein the electrically insulating polymer is a plastic, and specifically wherein one or more first layers (81) comprise one or more polymer films, specifically one or more plastic films.

3. The blade of claim 1 or claim 2, wherein the one or more first layers (81) are attached to the spar cap (74, 76).

4. The blade of any of claims 1-3, wherein the air termination system (82, 83) comprises a plurality of lightning receptors (83), and specifically further comprises a plurality of diverter strips (82) for guiding lightning to the lightning receptors (83).

5. The blade of any of claims 1-4, wherein the one or more first layers (81) extend beyond the spar cap (74, 76) along the longitudinal direction of the wind turbine blade (10).

6. The blade of any of claims 1-5, wherein the one or more first layers (81) extend beyond the spar cap (74, 76) along the chordwise direction of the wind turbine blade (10), specifically towards a leading edge (18) and towards a trailing edge (20) of the wind turbine blade (10).

7. The blade of any of claims 1-6, wherein a thickness of one of the first layers (81) is between 100 and 500 microns, specifically between 125 and 300 microns.

8. The blade of any of claims 1 - 7, wherein the one or more first layers (81) are polycarbonate layers.

9. The blade of any of claims 1-8, wherein a layer of the one or more first layers (81) comprises a coating for improving attachment to the spar cap (74, 76) and/or to one or more second layers (84) of the plurality of layers (81, 84) which are made of fiber reinforced composite material.

10. The blade of any of claims 1-9, wherein a width of the one or more first layers (81) is at least equal to a width of the spar cap (74, 76) and wherein a length of the one or more first layers (81) is at least equal to a length of the spar cap (74,76).

11. The blade of any of claims 1 - 10, wherein at least one of the one or more first layers (81) is provided in two or more sections (81') which are arranged along the longitudinal direction of the wind turbine blade (10).

12. A method (100) of manufacturing a wind turbine blade (10) comprising:
arranging (110) one or more layers of fiber (84) on a shell part mold (112, 113);
arranging (120) one or more sheets made of electrically insulating polymer (81), specifically electrically insulating plastic, on the shell part mold (112, 113);
arranging (130) a spar cap (74, 76) on the one or more sheets made of electrically insulating polymer (81) or on the layers of fiber (84);
infusing (140) the one or more layers (84) with resin, curing the resin and obtaining a shell part (24, 26) of the wind turbine blade (10); and
arranging (150) an air termination system (82, 83) at an outer surface of the shell part (24, 26) of the wind turbine blade (10).

13. The method of claim 12, wherein the one or more polymer sheets (81) are arranged directly on top of at least a portion of the one or more layers of fiber (84).

14. The method of claim 12 or claim 13, further comprising performing a treatment, specifically a corona treatment, on a surface of one of the polymer sheets (81) for improving adhesion between the polymer sheet (81) and the spar cap (74, 76) or between the polymer sheet (81) and one of the fiber layers (84).

15. The method of any of claims 12 - 14, wherein infusing the layers of fiber (84) with resin comprises providing resin on the mold (112, 113) from a leading edge side and from a trailing edge side of the mold (112, 113).
